(19) Europäisches Patentamt
European Patent Office
Office européen des brevets

(11) **EP 2 956 651 B1**

(12) **FASCICULE DE BREVET EUROPEEN**

(45) Date de publication et mention de la délivrance du brevet:
**16.11.2022 Bulletin 2022/46**

(21) Numéro de dépôt: **14705847.3**

(22) Date de dépôt: **30.01.2014**

(51) Classification Internationale des Brevets (IPC):
*F02D 41/00* (2006.01)  *F02D 41/14* (2006.01)
*F02D 23/02* (2006.01)  *F02B 37/12* (2006.01)
*F02B 37/18* (2006.01)  *F02D 41/18* (2006.01)

(52) Classification Coopérative des Brevets (CPC):
**F02D 41/0007; F02B 37/18; F02D 23/02;**
**F02D 41/1445; F02D 41/1446; F02D 41/145;**
F02D 41/182; F02D 2200/0402; F02D 2200/101;
Y02T 10/12

(86) Numéro de dépôt international:
**PCT/FR2014/050165**

(87) Numéro de publication internationale:
**WO 2014/125185 (21.08.2014 Gazette 2014/34)**

(54) **PROCEDE DE DETERMINATION DE LA PRESSION DE GAZ D'ECHAPPEMENT EN AMONT DU TURBOCOMPRESSEUR ET DU DEBIT TRAVERSANT SA TURBINE**

VERFARHEN ZUR BESTIMMUNG DES ABGASDRUCKS STROMAUFWÄRTS EINES TURBOLADERS UND DER ÜBER DESSEN TURBINE FLIESSENDEN GASMENGE

METHOD OF DETERMINATION OF EXHAUST GAS PRESSURE UPSTREAM OF A TURBO CHARGER AND OF GAS FLOW AMOUNT PASSING THROUGH ITS TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2013 FR 1351374**

(43) Date de publication de la demande:
**23.12.2015 Bulletin 2015/52**

(73) Titulaire: **PSA Automobiles SA
78300 Poissy (FR)**

(72) Inventeurs:
• **PACILLY, Christophe**
**F-78120 Rambouillet (FR)**
• **TRELLE, Frédéric**
**F-93150 Le Blanc Mesnil (FR)**

(56) Documents cités:
**DE-A1- 10 328 056      DE-A1-102004 051 837
FR-A1- 2 853 693      FR-A1- 2 921 114
US-A1- 2009 094 009**

EP 2 956 651 B1

## Description

### Domaine technique de l'invention

La présente invention se rapporte au domaine des moteurs à combustion interne suralimentés. L'invention concerne plus particulièrement un procédé de détermination de la pression de gaz d'échappement en amont du turbocompresseur et du débit traversant sa turbine.

### Arrière-plan technologique

Les contraintes dues aux normes, par exemple les normes européennes dites Euro VI, relatives aux niveaux d'émissions polluantes générées par le fonctionnement des moteurs à combustion interne, deviennent de plus en plus en plus sévères.

Les niveaux de performance requis pour les fonctions de contrôle moteur étant par conséquent de plus en plus exigent, il est intéressant de bien connaître l'état du système à contrôler. Cette connaissance passe actuellement par l'implantation de capteur complétée par une modélisation des phénomènes physiques présents. Une grandeur spécifique du système peut alors être estimée via la mesure du capteur et par le résultat de la modélisation.

En particulier dans le cas d'un moteur à combustion interne à allumage commandé équipé d'un système de suralimentation tel qu'un turbocompresseur, l'estimation du débit de gaz d'échappement passant par la turbine du turbocompresseur permet de faire fonctionner l'une des fonctions principales du contrôle moteur, l'estimation du remplissage en air frais.

Cette estimation est notamment utilisée afin de déterminer la quantité d'essence à injecter ainsi que l'avance à l'allumage à commander. L'estimation du débit échappement passant par la turbine est également nécessaire au pilotage de la pression de suralimentation. L'estimation de la pression échappement moyenne au niveau du collecteur est elle aussi nécessaire au pilotage de la pression de suralimentation.

On connait par exemple du document FR2947589A1 un dispositif logiciel appliqué à un banc moteur afin d'assurer la mise point de moteurs turbocompressés et proposant une modélisation du débit échappement, à partir de grandeurs relevées à l'admission. Cependant ce document ne tient pas compte de la présence du cas où une vanne de décharge (communément désigné par le terme anglais « wastegate » dans le milieu motoriste) est présente sur le turbocompresseur et dont le fonctionnement modifie le débit passant réellement dans la turbine du turbocompresseur. DE 103 28 056 A1 divulgue la détermination d'un débit de gaz d'échappement à partir d'une expression mathématique.

Il existe donc un besoin pour estimer avec précision le débit passant réellement dans une turbine de turbocompresseur quand celui-ci est équipé d'une conduite de dérivation des gaz d'échappement contrôlée par une vanne de décharge,

Un but de la présente invention est de proposer un procédé qui permet d'améliorer la précision d'estimation du débit passant réellement dans une turbine d'un tel turbocompresseur.

Pour atteindre cet objectif, il est prévu selon l'invention un procédé de contrôle d'un moteur thermique comprenant un turbocompresseur avec une partie détente formée d'une turbine et d'une conduite de dérivation de gaz d'échappement équipée d'un moyen de contrôle de l'ouverture du passage des gaz d'échappement dans la conduite, procédé dans lequel :

On détermine la pression en aval de la partie détente du turbocompresseur,
On détermine le débit de gaz d'échappement total produit par le moteur thermique,
On détermine l'ouverture du moyen de contrôle de l'ouverture,
caractérisé en ce que le procédé comprend une étape de détermination du débit de gaz d'échappement traversant la turbine et de la pression de gaz d'échappement en amont de la partie détente du turbocompresseur par résolution par itération d'un système d'équations comprenant :

- une première expression dans laquelle la pression de gaz d'échappement en amont de la partie détente du turbocompresseur est exprimée à partir de la pression en aval de la partie détente du turbocompresseur et du débit de gaz d'échappement traversant la turbine,
- une seconde expression dans laquelle le débit de gaz d'échappement traversant la turbine est exprimée à partir de la différence du débit de gaz d'échappement total produit par le moteur thermique et d'un débit de gaz d'échappement traversant la conduite de dérivation déterminé par une première relation :

$$\dot{m}_{Wastegate\_BSV} = S_{WG} \times \varphi\left(\frac{P_4}{P_3}\right) \times \frac{P_3}{\sqrt{T_3}}$$

Où :

- $\dot{m}_{Wastegate\_BSV}$ est la valeur du débit de gaz d'échappement traversant la conduite (22) de dérivation obtenue par cette première relation,
- $S_{WG}$ est la section efficace du moyen (23) de contrôle de l'ouverture du passage des gaz d'échappement dans la conduite (22) de dérivation.
- $\varphi$ est la fonction de Barré de St Venant entre la pression ($P_3$) des gaz d'échappement en amont de la partie détente du turbocompresseur (14) et la pression ($P_4$) des gaz d'échappement en aval de la partie détente du turbocompresseur (14).

$T_3$ est la température déterminée en amont de la partie détente du turbocompresseur (14).

De préférence, la pression de gaz d'échappement en amont de la partie détente du turbocompresseur est défini par :

$$P_3 = P_4 \times Cdet$$

Où $P_3$ est la pression en amont de la partie détente du turbocompresseur, $P_4$ est pression en aval de la partie détente du turbocompresseur, $C_{det}$ correspond à un coefficient fonction du débit ($\dot{m}_{Turbine}$) de gaz d'échappement traversant la turbine et du régime du moteur thermique.

De préférence encore, le coefficient $C_{det}$ est défini par une cartographie établissant le coefficient $C_{det}$ en fonction du débit normalisé de gaz d'échappement passant par la turbine et du régime moteur.

De préférence encore, lorsque l'écart entre la pression de gaz d'échappement en amont de la partie détente du turbocompresseur et la pression de gaz d'échappement en amont de la partie détente du turbocompresseur est inférieur à un seuil déterminé, le débit de gaz d'échappement traversant la conduite de dérivation est aussi déterminé par une seconde relation :

$$\dot{m}_{Wastegate_{MF}} = \dot{m}_{Echappement} \times R_{MF}(Op, N)$$

Où :

- $\dot{m}_{Wastegate_{MF}}$ est la valeur du débit de gaz d'échappement traversant la conduite de dérivation obtenue par cette seconde relation,
- $\dot{m}_{Echappement}$ est le débit de gaz échappement total produit par le moteur thermique traversant la partie détente du turbocompresseur,
- $R_{MF}$ est la fraction du débit de gaz d'échappement total passant par la soupape de dérivation, établie à partir d'une cartographie établissant ladite fraction de gaz d'échappement en fonction de l'ouverture du moyen contrôle du passage de gaz dans la conduite de dérivation et du régime du moteur thermique,

et en ce que le débit de gaz d'échappement traversant la conduite de dérivation retenu correspond à :

$$\dot{m}_{Wastegate} = Maximum(\dot{m}_{Wastegate_{BSV}} ; \dot{m}_{Wastegate_{MF}})$$

Où : Maximum () correspond à la fonction retenant la valeur maximale des deux débits de gaz d'échappement traversant la conduite de dérivation obtenus par la première et par la seconde relation.

De préférence, le seuil déterminé est compris entre 2500 Pa et 5000 Pa.

Dans une autre variante, le moyen de contrôle de l'ouverture du passage des gaz d'échappement dans la conduite de dérivation comprend une soupape de dérivation.

## Brève description des dessins

D'autres particularités et avantages apparaîtront à la lecture de la description ci-après d'un mode particulier de réalisation, non limitatif de l'invention, faite en référence aux figures dans lesquelles :

- La figure 1 est une représentation schématique d'un moteur à combustion interne apte à mettre en œuvre le procédé de l'invention.
- La figure 2 est une représentation schématique de la partie détente d'un turbocompresseur comprenant une turbine et une conduite de dérivation.

## Description détaillée

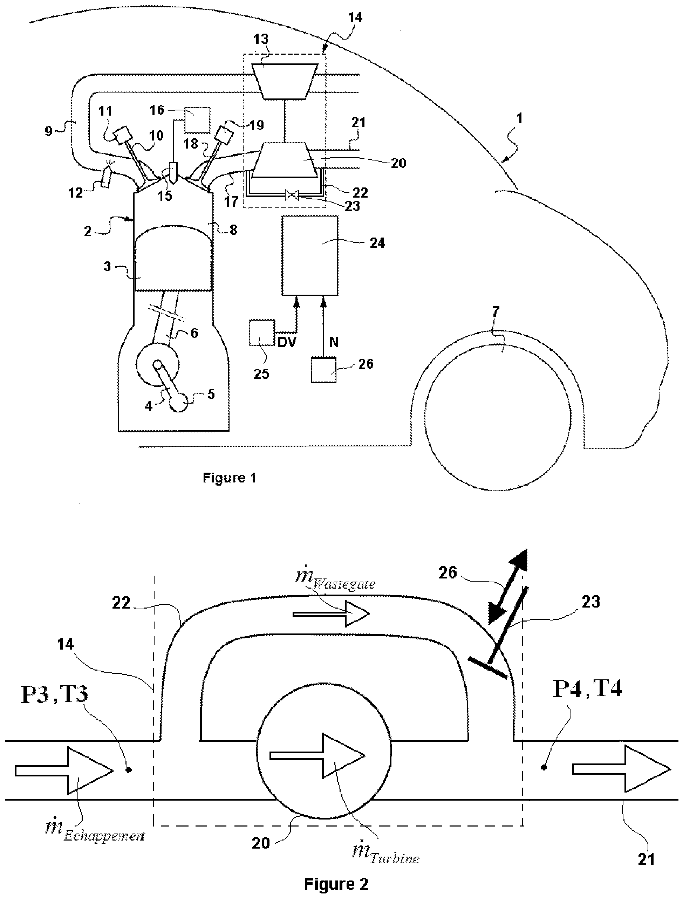

La figure 1 représente schématiquement un véhicule 1 équipé d'un moteur thermique. Par exemple, le véhicule 1 est un véhicule automobile tel qu'une voiture.

Le moteur du véhicule 1 est équipé de plusieurs cylindres. Toutefois, pour simplifier l'illustration, seul un cylindre 2 de ce moteur à combustion est représenté sur la figure 1. A l'intérieur du cylindre 2, un piston 3 est monté déplaçable en translation entre un point mort haut (PMH) et un point mort bas (PMB). Ce piston 3 entraîne en rotation une manivelle 4 d'un vilebrequin 5 par l'intermédiaire d'une bielle 6. Le vilebrequin 5 entraîne en rotation, par l'intermédiaire d'un mécanisme non représenté, les roues motrices du véhicule 2 telles que la roue 7.

Le cylindre 2 définit une chambre de combustion 8 délimitée par la partie supérieure du piston 3 et une culasse non représentée. Un conduit 9 d'admission d'air frais débouche dans la chambre 8 par l'intermédiaire d'une ouverture d'admission. Une soupape 10 d'admission est déplaçable entre une position fermée dans laquelle elle ferme de façon étanche à l'air frais l'ouverture d'admission, et une position ouverte dans laquelle l'air frais peut être admis à l'intérieur de la chambre 8 par l'intermédiaire de l'ouverture d'admission. La soupape 10 est déplacée entre sa position ouverte et sa position fermée par un actionneur 11 de soupapes d'admission.

Dans le représenté ici, le moteur est à injection indirecte de carburant, autrement dit un injecteur 12 de carburant est prévu dans le conduit 9 pour injecter le carburant dans l'air frais admis à l'intérieur de la chambre 8. Ainsi, le mélange air frais/carburant commence à se produire à l'intérieur du conduit d'air d'admission. Le moteur thermique peut cependant être à injection directe essence, c'est-à-dire avec l'injecteur de carburant implanté de sorte à injecter directement le carburant dans la chambre de combustion.

Le conduit 9 est fluidiquement raccordé à un compresseur 13 d'un turbocompresseur 14 propre à comprimer l'air frais admis à l'intérieur de la chambre 8. L'air frais ainsi comprimé est appelé air frais suralimenté.

Une bougie 15 propre à allumer le mélange air frais/carburant débouche dans la chambre 8. Cette bougie est commandée par un dispositif d'allumage 16.

Un conduit 17 d'échappement débouche également à l'intérieur de la chambre 8 par l'intermédiaire d'une ouverture d'échappement. Cette ouverture d'échappement est obturable par une soupape 18 d'échappement déplaçable entre une position fermée, et une position ouverte dans laquelle les gaz brûlés contenus à l'intérieur de la chambre 8 peuvent s'échapper par l'intermédiaire du conduit 17. Cette soupape 18 est déplacée entre ces positions ouverte et fermée par un actionneur de soupapes 19.

Les actionneurs de soupapes 11 et 19 peuvent être des actionneurs de soupapes mécaniques.

L'extrémité du conduit 17 opposée à son ouverture qui débouche dans la chambre 18 est fluidiquement raccordée à une turbine 20 du turbocompresseur 13. Cette turbine 20 permet notamment de détendre les gaz d'échappement avant de les envoyer dans une ligne d'échappement 21. Afin de limiter la pression, le turbocompresseur est équipé d'une conduite 22 de dérivation des gaz d'échappement de la turbine 20. Cette conduite 22 de dérivation est elle-même équipée d'un moyen 23 de contrôle de l'ouverture du passage des gaz d'échappement dans la conduite 22 de dérivation. Le moyen de contrôle 23 peut être par exemple une soupape de dérivation (encore désignée par le terme anglais « wastegate »). La turbine 20, la conduite 22 de dérivation et son moyen 23 de contrôle de l'ouverture du passage des gaz d'échappement dans la conduite 22 forment un ensemble que nous désignerons comme la partie dite détente du turbocompresseur 14.

Les différents équipements du moteur susceptibles d'être commandés tels que les actionneurs 11, 19, le dispositif d'allumage 16 ou encore l'injecteur 12 de carburant sont raccordés à une unité 24 de commande du moteur ou calculateur. Pour simplifier la figure 1, les connexions entre cette unité 24 et les différents équipements commandés n'ont pas été représentées.

Le calculateur 24 est également raccordé à de nombreux capteurs tels que par exemple un capteur 25 de la position angulaire DV du vilebrequin 5 et un capteur 26 du régime moteur N. On définit ici le régime moteur N comme étant par exemple le nombre de tours par minute effectués par l'arbre d'entraînement du moteur. Le calculateur 24 comprend les moyens d'acquisition et de traitement requis pour mettre en œuvre le procédé de l'invention. Le calculateur 24 comprend notamment les cartographies évoquées dans la suite de ce mémoire.

La présente invention concerne un procédé de détermination du débit de gaz d'échappement produits par le moteur thermique traversant la turbine 20 et de détermination de la pression en amont de la partie détente du turbocompresseur 14.

Le procédé de l'invention est maintenant exposé :

En relation avec la figure 2 présentant la répartition des débits de gaz d'échappement entre la turbine 20 la conduite de dérivation 22, le débit de gaz d'échappement, $\dot{m}_{Turbine}$, passant par la turbine 20, que l'on cherche à estimer, s'exprime de la façon suivante :

$$\dot{m}_{Turbine} = \dot{m}_{Echappement} - \dot{m}_{Wastegate}$$

où :

$\dot{m}_{Turbine}$, est le débit de gaz échappement passant par la turbine,
$\dot{m}_{Echappement}$, est le débit de gaz échappement total produit par le moteur thermique traversant la partie détente du turbocompresseur,
$\dot{m}_{Wastegate}$, est le débit de gaz échappement passant par la conduite 22 de dérivation.

La pression des gaz échappement en amont de la partie détente du turbocompresseur 14 s'exprime de la façon suivante :

$$P_3 = P_4 \times C_{det}$$

Où :

$P_3$ est la pression moyenne des gaz d'échappement en entrée de la partie détente du turbocompresseur 14. En pratique cette pression est celle vue dans le collecteur d'échappement,
$P_4$ est la pression moyenne des gaz d'échappement en sortie de la partie détente du turbocompresseur 14. En pratique cette pression $P_4$ peut être mesurée ou estimée,
$C_{det}$ est un coefficient qui est fonction du débit turbine, $\dot{m}_{Turbine}$, et du régime moteur, N.

Le débit $\dot{m}_{Wastegate}$ de gaz échappement passant par la conduite 22 de dérivation peut s'écrire avec une première relation basée sur une équation de Barré de St Venant :

$$\dot{m}_{Wastegate\_BSV} = S_{WG} \times \varphi\left(\frac{P_4}{P_3}\right) \times \frac{P_3}{\sqrt{T_3}}$$

Où:

- $S_{WG}$ est la section efficace de la soupape 23 de dérivation. De préférence, $S_{WG}$ se présente sous la forme d'une cartographie établissant la section efficace, $S_{WG}$, en fonction de l'ouverture $Op$ de la soupape de dérivation, qui peut être mesurée ou estimée, et du régime moteur N.
- $\varphi$ est la fonction de Barré de St Venant entre la pression $P_3$ des gaz d'échappement en amont du turbocompresseur 14 et la pression $P_4$ moyenne des gaz d'échappement en aval du turbocompresseur 14.
- $T_3$ est la température moyenne en amont de la partie détente du turbocompresseur 14.

En pratique, cette température $T_3$ peut être mesurée ou estimée.

On rappelle ici comment est définie la fonction de Barre Saint Venant $\varphi\left(\dfrac{P_2}{P_1}\right)$ entre deux pressions quelconque $P_1$ et $P_2$:

$$\text{Si } \frac{P_2}{P_1} > \left(\frac{2}{\gamma+1}\right)^{\frac{\gamma}{\gamma-1}} \Rightarrow \varphi\left(\frac{P_2}{P_1}\right) = \sqrt{\frac{2\gamma}{\gamma-1}\left[\left(\frac{P_2}{P_1}\right)^{\frac{2}{\gamma}} - \left(\frac{P_2}{P_1}\right)^{\frac{\gamma-1}{\gamma}}\right]}$$

$$\text{Si } \frac{P_2}{P_1} < \left(\frac{2}{\gamma+1}\right)^{\frac{\gamma}{\gamma-1}} \Rightarrow \varphi\left(\frac{P_2}{P_1}\right) = \sqrt{\gamma\left(\frac{2}{\gamma+1}\right)^{\frac{\gamma+1}{\gamma-1}}}$$

Où $\gamma$ est le rapport de la capacité calorifique à pression constante sur la capacité calorifique à volume constant. Classiquement, on considère $\gamma$ constant et égal à 1,44.

Cependant, pour des points de fonctionnement où les pressions $P_3$ et $P_4$ ont des valeurs trop proches pour utiliser la fonction de Barre Saint Venant, on utilisera avantageusement cette seconde relation :

$$\dot{m}_{Wastegate_{MF}} = \dot{m}_{Echappement} \times R_{MF}(Op, N)$$

Où :

$R_{MF}$ est la fraction du débit de gaz d'échappement total passant par la soupape 23 de dérivation. De préférence, cette fraction $R_{MF}$ est établie à partir d'une cartographie fonction de l'ouverture Op, qui peut être mesurée ou estimée, de la soupape 23 de dérivation et du régime moteur N.

De préférence, cette seconde relation est retenue pour aussi déterminer le débit de gaz échappement passant par la conduite 22 de dérivation lorsque l'écart entre la pression $P_3$ de gaz d'échappement en amont de la partie détente du turbocompresseur 14 et la pression $P_4$ de gaz d'échappement en amont de la partie détente du turbocompresseur 14 est inférieur à un seuil $\Delta P$ déterminé. En pratique, ce seuil $\Delta P$ est compris entre 2500 Pa et 5000 Pa.

Le débit $\dot{m}_{Wastegate}$ de gaz d'échappement dans le conduit 22 de dérivation retenu est alors le maximum des deux débits obtenus, soit :

$$\dot{m}_{Wastegate} = Maximum(\dot{m}_{Wastegate_{BSV}} \; ; \; \dot{m}_{Wastegate_{MF}})$$

Les deux équations sont donc alors calculées en permanence. L'utilisation de la fonction Maximum() permet d'éviter une discontinuité dans le calcul du débit $\dot{m}_{Wastegate}$ .

On fera le paramétrage des cartographies $S_{WG}$ et $R_{MF}$ afin de s'assurer que l'équation de Barré de St Venant ne soit pas utilisée à forte ouverture de la soupape 23 de dérivation et faible régime moteur, car dans cette situation on a : $P_3 \cong P_4$.

Afin de déterminer la pression moyenne, $P_3$, des gaz d'échappement en entrée du turbocompresseur 14, il est nécessaire d'effectuer une normalisation du débit de gaz d'échappement passant par la turbine 20 selon les conditions de pression et de température extérieures au turbocompresseur 14. Le débit normalisé, $\dot{m}_{Turbine_{NORM}}$, de gaz d'échappement passant par la turbine 20 s'écrit :

$$\dot{m}_{Turbine_{NORM}} = \dot{m}_{Turbine} \times \frac{P_{Ref}}{P_{Atmo}} \times \sqrt{\frac{T_3}{T_0}}$$

Où:

- $P_{Ref}$ est la pression atmosphérique de référence (généralement 1013hPa)
- $P_{Atmo}$ est la pression atmosphérique courante, qui peut être mesurée ou estimée,
- $T_3$ est la température moyenne en amont de la partie détente du turbocompresseur 14. En pratique, cette température est celle vue dans le collecteur d'échappement.
- $T_0$ est la température de référence (273.15K)

A partir de ce débit normalisé, $\dot{m}_{Turbine_{NORM}}$, on peut écrire la pression moyenne, $P_3$, en amont de la partie détente du turbocompresseur 14 :

$$P_3 = P_4 \times R_P\left(\dot{m}_{Turbine_{NORM}}, N\right)$$

Soit $C_{det} = R_P(\dot{m}_{Turbine_{NORM}}, N)$ et où $R_p$ est une cartographie fonction du débit normalisé $\dot{m}_{Turbine_{NORM}}$ de gaz d'échappement passant par la turbine 20 et du régime moteur N.

On aboutit alors à un système à deux équations et deux inconnus, $P_3$, et $\dot{m}_{Turbine}$ :

$$\begin{cases} P_3 = P_4 \times R_P\left(\dot{m}_{Turbine} \times \dfrac{P_{Ref}}{P_{Atmo}} \times \sqrt{\dfrac{T_3}{T_0}}, N\right) \\[2em] \dot{m}_{Turbine} = \dot{m}_{Echappement} - Maximum\left(S_{WG}(Op, N) \times \varphi\left(\dfrac{P_4}{P_3}\right) \times \dfrac{P_3}{\sqrt{T_3}} \; ; \; \dot{m}_{Echappement} \times R_{MF}(Op, N)\right) \end{cases}$$

La résolution de ce système s'effectue par itération et converge vers une solution unique. Avantageusement, on commence par calculer le débit de gaz d'échappement, $\dot{m}_{Turbine}$, passant par la turbine 20 à partir d'une première valeur imposée de $P_3$.

La résolution de ce système permet finalement de déterminer la valeur de la pression $P_3$ moyenne en amont de la partie détente du turbocompresseur 14 et la valeur du débit de gaz d'échappement, $\dot{m}_{Turbine}$, passant par la turbine 20.

Le procédé de l'invention convient encore pour un moteur thermique pouvant comprendre les caractéristiques suivantes :

Le moteur thermique peut comprendre ou non un déphaseur d'arbre à cames à l'admission,

Le moteur thermique peut comprendre ou non un déphaseur d'arbre à cames à l'échappement. On entend par déphaseur un dispositif qui permet un décalage angulaire dans le cycle moteur de la loi de levée qui elle reste invariable.

Le moteur thermique peut être à injection directe ou indirecte de carburant,

Le moteur thermique peut comprendre un circuit de recirculation des gaz brûlés de l'échappement vers l'admission, communément désigné circuit EGR,

L'invention a pour avantage de pouvoir estimer avec précision le débit de gaz d'échappement réellement par la turbine et l'évolution de la pression des gaz d'échappement dans le collecteur échappement et donc d'avoir des données fiables pour le fonctionnement du contrôle moteur.

## Revendications

1. Procédé de contrôle d'un moteur thermique comprenant un turbocompresseur avec une partie détente t formée d'une turbine (20) et d'une conduite (22) de dérivation de gaz d'échappement équipée d'un moyen (23) de contrôle de l'ouverture du passage des gaz d'échappement dans la conduite (22), procédé dans lequel :

   On détermine la pression ($P_4$) en aval de la partie détente du turbocompresseur,
   On détermine le débit ($\dot{m}_{Echappement}$) de gaz d'échappement total produit par le moteur thermique,
   On détermine l'ouverture (Op) du moyen (23) de contrôle de l'ouverture,
   **caractérisé en ce que** le procédé comprend une étape de détermination du débit ($\dot{m}_{Turbine}$) de gaz d'échappement traversant la turbine (20) et de la pression ($P_3$) de gaz d'échappement en amont de la partie détente du turbocompresseur par résolution par itération d'un système d'équations comprenant :

   - une première expression dans laquelle la pression ($P_3$) de gaz d'échappement en amont de la partie détente du turbocompresseur est exprimée à partir de la pression ($P_4$) en aval de la partie détente du turbocompresseur et du débit ($\dot{m}_{Turbine}$) de gaz d'échappement traversant la turbine (20),
   - une seconde expression dans laquelle le débit ($\dot{m}_{Turbine}$) de gaz d'échappement traversant la turbine (20) est exprimée à partir de la différence du débit ($\dot{m}_{Echappement}$) de gaz d'échappement total produit par le moteur thermique et d'un débit ($\dot{m}_{Wastegate}$) de gaz d'échappement traversant la conduite (22) de dérivation déterminé par une première relation :

$$\dot{m}_{Wastegate\_BSV} = S_{WG} \times \varphi\left(\frac{P_4}{P_3}\right) \times \frac{P_3}{\sqrt{T_3}}$$

Où:

- $\dot{m}_{Wastegate\_BSV}$ est la valeur du débit de gaz d'échappement traversant la conduite (22) de dérivation obtenue par cette première relation,
- $S_{WG}$ est la section efficace du moyen (23) de contrôle de l'ouverture du passage des gaz d'échappement dans la conduite (22) de dérivation.
- $\varphi$ est la fonction de Barré de St Venant entre la pression ($P_3$) des gaz d'échappement en amont de la partie détente du turbocompresseur (14) et la pression ($P_4$) des gaz d'échappement en aval de la partie détente du turbocompresseur (14).
- $T_3$ est la température déterminée en amont de la partie détente du turbocompresseur (14).

2. Procédé selon la revendication 1, **caractérisé en ce que** la pression ($P_3$) de gaz d'échappement en amont de la partie détente du turbocompresseur (14) est défini par :

$$P_3 = P_4 \times Cdet$$

Où Cdet correspond à un coefficient fonction du débit ($\dot{m}_{Turbine}$) de gaz d'échappement traversant la turbine (20) et du régime du moteur thermique.

3. Procédé selon la revendication 2, **caractérisé en ce que** le coefficient $C_{det}$ est défini par une cartographie établissant le coefficient $C_{det}$ en fonction du débit normalisé ($\dot{m}_{Turbine_{NORM}}$) de gaz d'échappement passant par la turbine (20) et du régime moteur.

4. Procédé selon la revendication l'une des revendications précédentes, **caractérisé en ce que** la section efficace $S_{WG}$ est établie au moyen d'une cartographie établissant ladite section efficace en fonction de l'ouverture ($O_p$) du moyen (23) contrôle du passage de gaz dans la conduite (22) de dérivation et du régime du moteur thermique.

5. Procédé selon la revendication l'une des revendications précédentes, **caractérisé en ce que** lorsque l'écart entre la pression ($P_3$) de gaz d'échappement en amont de la partie détente du turbocompresseur (14) et la pression ($P_4$) de gaz d'échappement en amont de la partie détente du turbocompresseur (14) est inférieur à un seuil ($\Delta P$) déterminé, le débit de gaz d'échappement traversant la conduite (22) de dérivation est aussi déterminé par une seconde relation :

$$\dot{m}_{Wastegate_{MF}} = \dot{m}_{Echappement} \times R_{MF}(Op, N)$$

Où:

- $\dot{m}_{Wastegate_{MF}}$ est la valeur du débit de gaz d'échappement traversant la conduite (22) de dérivation obtenue par cette seconde relation,
- $R_{MF}$ est la fraction du débit de gaz d'échappement total passant par la soupape de dérivation, établie à partir d'une cartographie établissant ladite fraction de gaz d'échappement en fonction de l'ouverture ($O_p$) du moyen (23) contrôle du passage de gaz dans la conduite (22) de dérivation et du régime du moteur thermique,

et **en ce que** le débit de gaz d'échappement traversant la conduite (22) de dérivation retenu correspondant à :

$$\dot{m}_{Wastegate} = Maximum(\dot{m}_{Wastegate_{BSV}} ; \dot{m}_{Wastegate_{MF}})$$

où : Maximum () correspond à la fonction retenant la valeur maximale des deux débits de gaz d'échappement traversant la conduite (22) de dérivation obtenus par la première et par la seconde relation.

**6.** Procédé selon la revendication 5, **caractérisé en ce que** le seuil (∆P) déterminé est compris entre 2500 Pa et 5000 Pa.

**7.** Procédé selon l'une quelconque des revendications précédentes dans lequel le moyen (23) de contrôle de l'ouverture du passage du gaz d'échappement dans la conduite (22) de dérivation comprend une soupape de dérivation.

**Patentansprüche**

**1.** Verfahren zum Steuern einer Wärmekraftmaschine, die einen Turbolader mit einem Expansionsteil umfasst, der von einer Turbine (20) und einem Abgasbypassrohr (22) gebildet wird, das mit einem Mittel (23) zum Steuern des Öffnens des Durchgangs der Abgase in der Leitung (22) ausgestattet ist, Methode, bei der :

Der Druck ($P_4$) stromabwärts des Expansionsteils des Turboladers wird bestimmt,
von der Wärmekraftmaschine erzeugte ($\dot{m}_{Echappement}$) Gesamtabgasstrom wird bestimmt,
Die Blende (Op) der Blendensteuereinrichtung (23) wird bestimmt,
**dadurch gekennzeichnet, dass** das Verfahren einen Schritt zum Bestimmen der Durchflussrate umfasst ($\dot{m}_{Turbine}$) des durch die Turbine (20) strömenden Abgases und des Drucks ($P_3$) des Abgases stromaufwärts des Expansionsteils des Turboladers durch iteratives Lösen eines Gleichungssystems, umfassend :

- einen ersten Ausdruck, in dem der Druck ($P_3$) des Abgases stromaufwärts des Expansionsteils des Turboladers aus dem Druck ($P_4$) stromabwärts des Expansionsteils des Turboladers und der Strömungsrate ($\dot{m}_{Turbine}$) des Abgases ausgedrückt wird Durchgang durch die Turbine (20),
- einen zweiten Ausdruck, in dem der Durchsatz ($\dot{m}_{Turbine}$) des durch die Turbine (20) strömenden Abgases aus der Differenz zwischen dem Durchsatz ($\dot{m}_{Echappement}$) des gesamten von der Wärmekraftmaschine erzeugten Abgases und einem Durchsatz ($\dot{m}_{Wastegate}$) des Abgases ausgedrückt wird Durchgang durch das Bypassrohr (22), bestimmt durch eine erste Beziehung :

$$\dot{m}_{Wastegate\_BSV} = S_{WG} \times \varphi\left(\frac{P_4}{P_3}\right) \times \frac{P_3}{\sqrt{T_3}}$$

Wo :

• $\dot{m}_{Wastegate\_BSV}$ der durch diese erste Beziehung erhaltene Wert der Durchflussrate des durch das Bypassrohr (22) strömenden Abgases ist,
• $S_{WG}$ der Querschnitt des Mittels (23) zum Steuern der Öffnung des Durchlasses der Abgase in der Umleitung (22) ist.
• $\varphi$ ist die Barre-de-St-Venant-Funktion zwischen dem Druck ($P_3$) der Abgase stromaufwärts des Expansionsteils des Turboladers (14) und dem Druck ($P_4$) der Abgase stromabwärts des Expansionsteils des Turboladers (14).
• $T_3$ ist die vor dem Expansionsteil des Turboladers (14) ermittelte Temperatur.

**2.** Verfahren nach Anspruch 1, **dadurch gekennzeichnet, dass** der Abgasdruck ($P_3$) vor dem Expansionsteil des Turboladers (14) definiert ist durch:

$$P_3 = P_4 \times Cdet$$

Wobei Cdet einem Koeffizienten entspricht, der von der Strömungsrate ($\dot{m}_{Turbine}$) des durch die Turbine (20) strömenden Abgases und der Drehzahl der Wärmekraftmaschine abhängt.

**3.** Verfahren nach Anspruch 2, **dadurch gekennzeichnet, dass** der Koeffizient $C_{det}$ durch ein Kennfeld definiert wird, das den Koeffizienten $C_{det}$ in Abhängigkeit von der standardisierten Strömungsrate ($\dot{m}_{TurbineNORM}$) des durch die Turbine (20) strömenden Abgases und der Motordrehzahl festlegt.

**4.** Verfahren nach einem der vorangehenden Ansprüche, **dadurch gekennzeichnet, dass** der effektive Querschnitt $S_{WG}$ mittels einer Karte festgelegt wird, die den besagten effektiven Querschnitt in Abhängigkeit von der Öffnung ($O_p$) der Mittel (23) zur Steuerung des Gasdurchtritts festlegt die Bypassleitung (22) und die Drehzahl der Wärmekraftmaschine.

5. Verfahren nach Anspruch einem der vorhergehenden Ansprüche, **dadurch gekennzeichnet, dass** wenn die Differenz zwischen dem Druck ($P_3$) des Abgases stromaufwärts des Expansionsteils des Turboladers (14) und dem Druck ($P_4$) des Abgases stromaufwärts von der Expansionsteil des Turboladers (14) unterhalb einer bestimmten Schwelle ($\Delta P$) liegt, der durch das Bypassrohr (22) strömende Abgasstrom wird auch durch eine zweite Beziehung bestimmt:

$$\dot{m}_{Wastegate_{MF}} = \dot{m}_{Echappement} \times R_{MF}(Op, N)$$

Wo :

- $\dot{m}_{WastegateMF}$ der durch diese zweite Beziehung erhaltene Wert der Durchflussrate des durch das Bypassrohr (22) strömenden Abgases ist,
- $R_{MF}$ ist, ermittelt aus einem Kennfeld, das den Abgasanteil als Funktion der Öffnung ($O_p$) der Einrichtung (23) festlegt, die den Gasdurchgang in der Umgehungsleitung steuert (22) und der Drehzahl der Wärmekraftmaschine, und dadurch, dass der Abgasstrom, der durch die ausgewählte Umgehungsleitung (22) strömt, entspricht:

$$\dot{m}_{Wastegate} = Maximum(\dot{m}_{Wastegate_{BSV}} ; \dot{m}_{Wastegate_{MF}})$$

wobei : Maximum () der Funktion entspricht, die den durch die erste und durch die zweite Beziehung erhaltenen Maximalwert der beiden Durchsätze des Abgases, das durch das Bypassrohr (22) strömt, beibehält.

6. Verfahren nach Anspruch 5, **dadurch gekennzeichnet, dass** die ermittelte Schwelle ($\Delta P$) zwischen 2500 Pa und 5000 Pa liegt.

7. Verfahren nach einem der vorhergehenden Ansprüche, wobei die Einrichtung (23) zum Steuern der Öffnung des Abgaskanals in der Umgehungsleitung (22) ein Umgehungsventil umfasst.

**Claims**

1. Method for controlling a thermal engine comprising a turbocharger with an expansion part t formed by a turbine (20) and an exhaust gas bypass pipe (22) equipped with a means (23) for controlling opening the passage of the exhaust gases in the conduit (22), method in which :

The pressure ($P_4$) downstream of the expansion part of the turbocharger is determined, total exhaust gas flow ($\dot{m}_{Echappement}$) produced by the heat engine is determined, The aperture (Op) of the aperture control means (23) is determined, **characterized in that** the method comprises a step of determining the flow rate ($\dot{m}_{Turbine}$) of exhaust gas passing through the turbine (20) and the pressure ($P_3$) of the exhaust gas upstream of the expansion part of the turbocharger by solving by iteration a system of equations comprising :

- a first expression in which the pressure ($P_3$) of the exhaust gas upstream of the expansion part of the turbocharger is expressed from the pressure ($P_4$) downstream of the expansion part of the turbocharger and the flow rate ($\dot{m}_{Turbine}$) of exhaust gas passing through the turbine (20),
- a second expression in which the flow rate ($\dot{m}_{Turbine}$) of exhaust gas passing through the turbine (20) is expressed from the difference in the flow rate ($\dot{m}_{Echappement}$) of total exhaust gas produced by the heat engine and a flow rate ($\dot{m}_{Wastegate}$) of exhaust gas passing through the bypass pipe (22) determined by a first relationship :

$$\dot{m}_{Wastegate\_BSV} = S_{WG} \times \varphi\left(\frac{P_4}{P_3}\right) \times \frac{P_3}{\sqrt{T_3}}$$

**EP 2 956 651 B1**

Where :

- $\dot{m}_{Wastegate\_BSV}$ is the value of the flow rate of exhaust gas passing through the bypass pipe (22) obtained by this first relation.
- $S_{WG}$ is the cross section of the means (23) for controlling the opening of the passage of the exhaust gases in the duct (22) by-pass.
- $\varphi$ is the Barre de St Venant function between the pressure ($P_3$) of the exhaust gases upstream of the expansion part of the turbocharger (14) and the pressure ($P_4$) of the exhaust gases downstream of the expansion part of the turbocharger (14).
- $T_3$ is the temperature determined upstream of the expansion part of the turbocharger (14).

2. Method according to Claim 1, **characterized in that** the exhaust gas pressure ($P_3$) upstream of the expansion part of the turbocharger (14) is defined by :

$$P_3 = P_4 \times Cdet$$

Where Cdet corresponds to a coefficient depending on the flow rate ($\dot{m}_{Turbine}$) of exhaust gas passing through the turbine (20) and the speed of the heat engine.

3. Method according to Claim 2, **characterized in that** the coefficient $C_{det}$ is defined by a map establishing the coefficient $C_{det}$ as a function of the standardized flow rate ($\dot{m}_{Turbine_{NORM}}$) of exhaust gas passing through the turbine (20) and of the engine speed.

4. Method according to claim one of the preceding claims, **characterized in that** the effective section $S_{WG}$ is established by means of a map establishing the said effective section as a function of the opening ($O_p$) of the means (23) controlling the passage of gas in the pipe (22) by-pass and the speed of the heat engine.

5. Method according to claim one of the preceding claims, **characterized in that** when the difference between the pressure ($P_3$) of the exhaust gas upstream of the expansion part of the turbocharger (14) and the pressure ($P_4$) of exhaust gas upstream of the expansion part of the turbocharger (14) is below a determined threshold ($\Delta P$), the flow of exhaust gas passing through the bypass pipe (22) is also determined by a second relationship:

$$\dot{m}_{Wastegate_{MF}} = \dot{m}_{Echappement} \times R_{MF}(Op, N)$$

Where :

- $\dot{m}_{Wastegate_{MF}}$ is the value of the flow rate of exhaust gas passing through the bypass pipe (22) obtained by this second relationship.
- $R_{MF}$ is the fraction of the total exhaust gas flow passing through the bypass valve, established from a map establishing said fraction of exhaust gas as a function of the opening ($O_p$) of the means (23) controlling the passage of gas in the bypass line (22) and the heat engine speed,

and **in that** the flow of exhaust gas passing through the selected bypass line (22) corresponds to :

$$\dot{m}_{Wastegate} = Maximum(\dot{m}_{Wastegate_{BSV}} ; \dot{m}_{Wastegate_{MF}})$$

where : Maximum () corresponds to the function retaining the maximum value of the two flow rates of exhaust gas passing through the pipe (22) by-pass obtained by the first and by the second relationship.

6. Method according to Claim 5, **characterized in that** the determined threshold ($\Delta P$) is between 2500 Pa and 5000 Pa.

7. A method as claimed in any preceding claim wherein the means (23) for controlling the opening of the exhaust gas passage in the bypass line (22) comprises a bypass valve.

**11**

**Figure 1**

$\dot{m}_{Wastegate}$

**26**

**22**

**23**

**14**

**P3,T3**

**P4,T4**

$\dot{m}_{Echappement}$

**20**

$\dot{m}_{Turbine}$

**21**

**Figure 2**

**EP 2 956 651 B1**

**RÉFÉRENCES CITÉES DANS LA DESCRIPTION**

**Documents brevets cités dans la description**

- FR 2947589 A1
- DE 10328056 A1